# EUROPEAN PATENT APPLICATION

(11) **EP 4 598 082 A1**
(43) Date of publication of application: **06.08.2025**
(21) Application number: 22959982.4
(22) Date of filing: 28.09.2022
(51) Int. Cl.: H04W 12/75

(54) **NETWORK SATELLITE COVERAGE DATA AUTHORIZATION METHOD, DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Gunzelmann, Rainer
(86) International application number: PCT/CN2022/122348
(87) International publication number: WO 2024/065339

(57) **Abstract**

Disclosed in embodiments of the present disclosure are a network satellite coverage data authorization method, a device, and a storage medium, applicable to the technical field of communications. A terminal device firstly sends a registration request to an AMF, and receives a registration acceptance response fed back by the AMF. On this basis, the terminal device and the AMF can interact with each other, and authorization data can be prevented from being copied and leaked by means of a temporary ID, so that it is ensured that the authorization data sent to a server by the terminal device and the authorization data sent to the terminal device by the AMF are consistent.

## Description

### TECHNICAL FIELD

The present disclosure relates to the field of communication technologies, and particularly to an authorization method for network satellite coverage data, a device and a storage medium.

### BACKGROUND

In communications systems, the 3GPP (3^{rd} Generation Partnership Project) R18 (Release-18) protocol approves research on satellite access architectures, one goal of which is to enhance a network architecture to support satellite access with discontinuous satellite coverage.

In a related technology, in order to support the satellite access with the discontinuous satellite coverage, a user equipment may obtain authorization data from network and then use the authorization data to request satellite coverage data.

However, in the related art, the security of the authorization data is uncontrollable. In a case that the authorization data obtained by the user equipment from the network is copied or leaked to other user equipments, when the user equipment sends the authorization data to a server, the server cannot verify whether the authorization data sent by the user equipment is the authorization data obtained from the network. Therefore, in a case that the authorization data is not protected, the purpose of data authorization may be defeated.

### SUMMARY

An authorization method for network satellite coverage data, a device and a storage medium are proposed in the present disclosure, so as to realize the protection of authorization data and avoid the replication and leakage of the authorization data.

In a first aspect, embodiments of the present disclosure provide an authorization method for network satellite coverage data. The method is performed by a user equipment, UE, and includes:
sending a registration request to an access and mobility management function, AMF, in which the registration request includes satellite coverage data request information from the UE; and
receiving a registration accept response fed back by the AMF, in which the registration accept response includes authorization data, and the authorization data includes a first temporary identifier, ID, assigned by a server to the UE.

The present disclosure provides an authorization method for network satellite coverage data, device and storage medium. The UE first sends a registration request to the AMF and receives the authorization data in the registration accept response fed back by the AMF. Based on this, the UE interacts with the AMF, and may prevent the authorization data from being copied and leaked through a temporary ID, so as to ensure that the authorization data sent by the UE to the server is consistent with the authorization data sent by the AMF to the UE.

Optionally, in an embodiment of the present disclosure, the method further includes:
sending an authorization request to the server, in which the authorization request comprises the authorization data, and the authorization data comprises the first temporary ID; and
receiving an authorization response sent by the server.

Optionally, in an embodiment of the present disclosure, the first temporary ID is sent from the server to the AMF.

Optionally, in an embodiment of the present disclosure, before sending the authorization request to the server, the method further includes:
performing authentication with the server and establishing a secure channel with the server.

In a second aspect, the embodiments of the present disclosure provide an authorization method for network satellite coverage data. The method is performed by an access and mobility management function, AMF, and includes:
receiving a registration request from a user equipment, UE, in which the registration request includes satellite coverage data request information from the UE;
sending the satellite coverage data request in the registration request to a unified data management function, UDM, and determining whether the UE is allowed to receive the network satellite coverage data based on UE subscription information;
in a case of being notified by the UDM that the UE is allowed to receive the network satellite coverage data, requesting authorization data from a server, in which the authorization data includes a first temporary identifier, ID, assigned by the server to the UE; and
sending a registration accept message to the UE, in which the registration accept message includes the authorization data.

Optionally, in an embodiment of the present disclosure, the method further includes:
receiving the first temporary ID sent by the server.

In a third aspect, the embodiments of the present disclosure provide an authorization method for network satellite coverage data. The method is performed by a server, and includes:
receiving an authorization request sent by a user equipment, UE, in which the authorization request includes a first temporary identifier, ID;
performing verification based on the first temporary ID and an authentication ID corresponding to the UE; and
sending an authorization response to the UE based on a verification result.

Optionally, in an embodiment of the present disclosure, the method further includes:
sending the first temporary ID to an access and mobility management function, AMF.

Optionally, in an embodiment of the present disclosure, the method further includes:
performing authentication with the UE and establishing a secure channel with the UE, and recording the authentication ID of the UE when the UE passes the security authentication.

Optionally, in an embodiment of the present disclosure, the method further includes:
establishing a mapping relationship between the first temporary ID and the authentication ID.

In a fourth aspect, the embodiments of the present disclosure provide a user equipment, UE. The UE includes:
a first sending module, configured to send a registration request to an AMF, in which the registration request comprises satellite coverage data request information from the UE; and
a first receiving module, configured to receive a registration accept response fed back by the AMF, in which the registration accept response comprises authorization data, and the authorization data comprises a first temporary identifier, ID, assigned by a server to the UE.

In the fourth aspect, the embodiments of the present disclosure provide a UE. The UE further includes:
a second sending module, configured to send an authorization request to the server, in which the authorization request comprises the authorization data, and the authorization data comprises the first temporary ID; and
a second receiving module, configured to receive an authorization response sent by the server.

In a fifth aspect, the embodiments of the present disclosure provide an access and mobility management function, AMF. The AMF includes:
a third receiving module, configured to receive a registration request from a user equipment, UE, in which the registration request comprises satellite coverage data request information from the UE;
a third sending module, configured to send the satellite coverage data request in the registration request to a unified data management function, UDM, and determine whether the UE is allowed to receive the network satellite coverage data based on UE subscription information;
a fourth receiving module, configured to in a case of being notified by the UDM that the UE is allowed to receive the network satellite coverage data, request authorization data from a server, in which the authorization data comprises a first temporary identifier, ID, assigned by the server to the UE; and
a fourth sending module, configured to send a registration accept message to the UE, in which the registration accept message comprises the authorization data.

In a sixth aspect, the embodiments of the present disclosure provide a server. The server includes:
a fifth receiving module, configured to receive an authorization request sent by a user equipment, UE, in which the authorization request comprises a first temporary identifier, ID;
an verification module, configured to perform verification based on the first temporary ID and an authentication ID corresponding to the UE; and
a fifth sending module, configured to send an authorization response to the UE based on a verification result.

In a seventh aspect, the embodiments of the present disclosure provide a communication apparatus including a processor. When a computer program in a memory is called by the processor, the method in the first aspect is implemented.

In an eighth aspect, the embodiments of the present disclosure provide a communication apparatus including a processor. When a computer program in a memory is called by the processor, the method in the second aspect is implemented.

In a ninth aspect, the embodiments of the present disclosure provide a communication apparatus including a processor. When a computer program in a memory is called by the processor, the method in the third aspect is implemented.

In a tenth aspect, the embodiments of the present disclosure provide a communication apparatus, including a memory for storing a computer program and a processor. When the computer program stored in the memory is executed by the processor, the communication apparatus is caused to implement the method in the first aspect.

In an eleventh aspect, the embodiments of the present disclosure provide a communication apparatus, including a memory for storing a computer program and a processor. When the computer program stored in the memory is executed by the processor, the communication apparatus is caused to implement the method in the second aspect.

In a twelfth aspect, the embodiments of the present disclosure provide a communication apparatus, including a memory for storing a computer program and a processor. When the computer program stored in the memory is executed by the processor, the communication apparatus is caused to implement the method in the third aspect.

In a thirteenth aspect, the embodiments of the present disclosure provide a communication apparatus, including a processor and an interface circuit for receiving code instructions and sending the code instructions to the processor, in which the processor is configured to run the code instructions to cause the apparatus to perform the method in the first aspect.

In a fourteenth aspect, the embodiments of the present disclosure provide a communication apparatus, including a processor and an interface circuit for receiving code instructions and sending the code instructions to the processor, in which the processor is configured to run the code instructions to cause the apparatus to perform the method in the second aspect.

In a fifteenth aspect, the embodiments of the present disclosure provide a communication apparatus, including a processor and an interface circuit for receiving code instructions and sending the code instructions to the processor, in which the processor is configured to run the code instructions to cause the apparatus to perform the method in the third aspect.

In a sixteenth aspect, the embodiments of the present disclosure provide a communication system. The system includes a communication apparatus described in the fourth aspect and a UE, an AMF, a server described in the sixth aspect, or the system includes a communication apparatus described in the seventh aspect and a communication apparatus described in the ninth aspect, or the system includes a communication apparatus described in the tenth aspect and a communication apparatus described in the twelfth aspect, or the system includes a communication apparatus described in the thirteenth aspect and a communication apparatus described in the fifteenth aspect.

In a seventeenth aspect, a computer-readable storage medium is provided in the embodiments of the present disclosure. The computer-readable storage medium is configured to store instructions used by the network device. When the instructions are executed, the UE is caused to perform any one of the methods described in the first aspect to the third aspect.

In an eighteenth aspect, a computer program product including a computer program is provided in the embodiments of the present disclosure. When the computer program is running on a computer, the computer is caused to perform any one of the methods described in the first aspect to the third aspect.

In a nineteenth aspect, a system on chip (SOC) is provided in the disclosure. The SOC includes at least one processor and an interface configured to support a network device to perform functions involved in the method described in any aspect from the first aspect to the third aspect, and for example, to determine or process at least one of data and information involved in the above methods. In a possible design, the SOC further includes a memory. The memory is configured to save a necessary computer program and data of a source-auxiliary node. The SOC may consist of a chip, or may include a chip and other discrete devices.

In a twentieth aspect, a computer program is provided in the present disclosure. When the computer program is running on a computer, the computer is caused to perform any one of the methods described in the first aspect to the third aspect.

### BRIEF DESCRIPTION OF THE DRAWINGS

The above and/or additional aspects and advantages of the disclosure will become apparent and easily understood from the following descriptions of embodiments in conjunction with the accompanying drawings, in which:
FIG. 1 is a diagram illustrating an architecture of a communication system provided in an embodiment of the present disclosure;
FIG. 2a is a flowchart illustrating an authorization method for network satellite coverage data provided in an embodiment of the present disclosure;
FIG. 2b is a flowchart illustrating an authorization method for network satellite coverage data provided in an embodiment of the present disclosure;
FIG. 3 is a flowchart illustrating an authorization method for network satellite coverage data provided in an embodiment of the present disclosure;
FIG. 4 is a flowchart illustrating an authorization method for network satellite coverage data provided in an embodiment of the present disclosure;
FIG. 5 is a schematic diagram illustrating a procedure for requesting authorization data provided in an embodiment of the present embodiment;
FIG. 6 is a schematic diagram illustrating a process of a UE requesting coverage data from a server provided in an embodiment of the present embodiment;
FIG. 7a is a block diagram illustrating a UE provided in an embodiment of the present embodiment;
FIG. 7b is a block diagram illustrating a UE provided in an embodiment of the present embodiment;
FIG. 8 is a block diagram illustrating an AMF provided in an embodiment of the present embodiment;
FIG. 9 is a block diagram illustrating a server provided in an embodiment of the present embodiment;
FIG. 10 is a block diagram illustrating a communication apparatus provided in another embodiment of the present disclosure;
FIG. 11 is a block diagram of a chip provided in an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are only for the purpose of describing a particular embodiment and are not intended to limit the embodiments of the present disclosure. The terms "a" and "the" in the singular form as used in the embodiments of the present disclosure and the accompanying claims are also intended to include the majority form, unless the context clearly indicates otherwise. It should also be understood that the term "and/or" as used herein refers to and encompasses any or all possible combinations of one or more associated listed items.

It should be understood that although the terms first, second, third, etc. may be used to describe various information in the embodiments of the present disclosure, such information should not be limited to these terms. These terms are used only to distinguish the same type of information from one another. For example, without leaving the scope of the embodiments of the present disclosure, a first information may also be referred to as a second information, and likewise the second information may be referred to as the first information. Depending on the context, the words "in a case" and "if" used here can be interpreted as "in... when" or "in respond to determining".

For ease of understanding, terms involved in the disclosure are introduced first.

### 1. Access and Mobility Management Function (AMF)

The AMF is responsible for managing switching between nodes within a next generation radio access network, as well as receiving all connection and session-related information from a user equipment, UE, but is only responsible for handling connection and mobility management tasks.

### 2. Unified Data Management (UDM)

UDM is responsible for management of a user equipment identifier, UE ID, subscription data, authentication data, and service network element registration of the UE (for example, a current AMF that provides services for the UE, for example, in a case that the UE switches an access AMF, the UDM sends a deregistration message to an old AMF, to request the old AMF to delete information about the UE).

### 3. Transport Layer Security (TLS)

TLS is a security protocol used to create a secure connection between two applications over network to prevent eavesdropping and tampering when exchanging data, thus providing security and data integrity protection for internet communications.

### 4. Hypertext Transfer Protocol Secure (HTTPS)

HTTPS is a hypertext transfer protocol, HTTP, channel with a safety goal. Transmission encryption and identity authentication are used to ensure security of a transmission process based on HTTP.

In order to understand the authorization method disclosed in embodiments of the present disclosure better, a communication system to which the embodiments of the present disclosure are applicable is described below.

The embodiments of the present disclosure are described in detail below, examples of which are shown in the accompanying drawings, in which an identical or similar label throughout indicate the same or similar element. The embodiments described below by reference to the attached drawings are illustrative and are intended to interpret the disclosure and are not to be construed as a limitation of the disclosure.

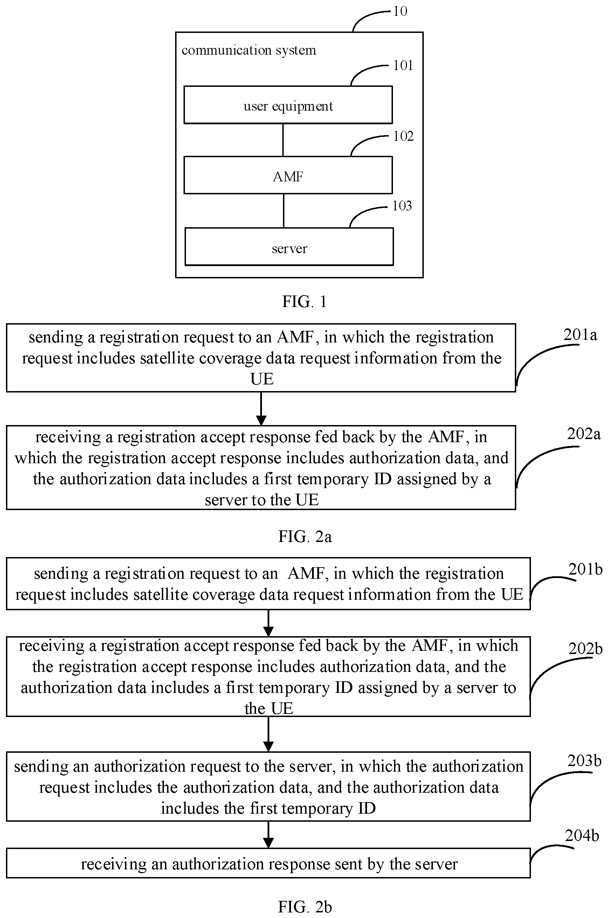

FIG. 1 is a schematic diagram illustrating an architectural of a communication system provided in an embodiment of the present disclosure. The communication system may include, but is not limited to, one user equipment, UE, one AMF, and one server. The number and form of devices shown in FIG. 1 are only shown as an example, and do not constitute a limitation on the embodiments of the present disclosure. The communication system may include two or more UEs, AMFs and servers in a practical application. The communication system in FIG. 1 including one UE 101, one AMF 102 and one server 103 is shown as an example.

It needs to be noted that the technical solution in the embodiments of the present disclosure may be applicable to various communication systems, for example, a long term evolution (LTE) system, a 5th generation (5G) mobile communication system, a 5G new radio (NR) system or other future new mobile communication systems. It should also be noted that the side link in the embodiments of the present disclosure may also be called a sidelink or a direct link.

The UE 101 in the embodiments of the present disclosure is an entity on the user side for receiving or sending signals, such as a mobile phone. The UE may also be called a terminal, a user equipment (UE), a mobile station (MS), a mobile terminal (MT), etc. The UE may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the UE.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The authorization method and apparatus for network satellite coverage data provided in the present disclosure are introduced in detail in combination with the attached drawings.

FIG. 2a is a flowchart illustrating an authorization method for network satellite coverage data in an embodiment of the present disclosure.

As illustrated in FIG. 2a, the method is performed by a user equipment, UE, and may include but not limited to the following steps.

S201a, a registration request is sent to an access and mobility management function, AMF, in which the registration request includes satellite coverage data request information from the UE.

In an embodiment of the present disclosure, non-access stratum (NAS) transmission is used to send the registration request the AMF so that the UE may send signaling from the UE to the AMF on a non-terrestrial network (NTN).

It should be noted that in an embodiment of the present disclosure, after the registration request is sent to the AMF, the AMF may communicate with a server, and based on the interaction between the AMF and the server, the AMF may send a registration accept response fed back by the server to the UE, which will be explained in detail in subsequent embodiments.

S202a, a registration accept response fed back by the AMF is received, in which the registration accept response includes authorization data, and the authorization data includes a first temporary identifier, ID, assigned by a server to the UE.

And, in an embodiment of the present disclosure, the first temporary ID is sent from the server to the AMF.

Also, in an embodiment of the present disclosure, the registration accept response is sent by the AMF to the UE via NAS transmission.

In summary, in the authorization method for network satellite coverage data provided in the embodiment of the present disclosure, the UE first sends the registration request to the AMF and receives the authorization data in the registration accept response fed back by the AMF. Based on this, the UE, the AMF and the server may interact with each other, and may prevent the authorization data from being copied and leaked through the temporary ID so as to ensure that the authorization data sent by the AMF to the UE may be verified in the subsequent process.

FIG. 2b is a flowchart illustrating an authorization method for network satellite coverage data in an embodiment of the present disclosure.

As illustrated in FIG. 2b, the method is performed by a user equipment, UE, and may include but not limited to the following steps.

S201b, a registration request is sent to an access and mobility management function, AMF, in which the registration request includes satellite coverage data request information from the UE.

In an embodiment of the present disclosure, non-access stratum (NAS) transmission is used to send the registration request the AMF, so that the UE may send signaling from the UE to the AMF on a non-terrestrial network (NTN).

It should be noted that in an embodiment of the present disclosure, after the registration request is sent to the AMF, the AMF may communicate with a server, and based on the interaction between the AMF and the server, the AMF may send a registration accept response fed back by the server to the UE, which will be explained in detail in subsequent embodiments.

S202b, a registration accept response fed back by the AMF is received, in which the registration accept response includes authorization data, and the authorization data includes a first temporary identifier, ID, assigned by a server to the UE.

And, in an embodiment of the present disclosure, the first temporary ID is sent from the server to the AMF.

Also, in an embodiment of the present disclosure, the registration accept response is sent by the AMF to the UE via NAS transmission.

S203b, an authorization request is sent to the server, in which the authorization request includes the authorization data, and the authorization data includes the first temporary ID.

And, in an embodiment of the present disclosure, a way to send the authorization request to the server may include:
sending the authorization request to the server through HTTPS.

For example, in an embodiment of the present disclosure, the UE may send the authorization request to the server through HTTPS, in which the authorization request may be in the form of a string, HTTPS GET, and the authorization request carries a uniform resource identifier, which is equivalent to the authorization data in the authorization request sent in a NAS message.

Also, in an embodiment of the present disclosure, TLS mutual authentication may be performed between the UE and the server based on their respective authentication IDs after the authorization request is sent to the server.

It should be noted that in an embodiment of the present disclosure, after the authorization request is sent to the server, the server may verify the authorization data, and then send the authorization response to the UE based on a verification result, which will be explained in detail in subsequent embodiments.

S204b, an authorization response sent by the server is received.

And, in an embodiment of the present disclosure, the authorization response may include satellite coverage data requested in the registration request.

In summary, in the authorization method for network satellite coverage data provided in the embodiment of the present disclosure, the UE first sends the registration request to the AMF, receives the authorization data in the registration accept response fed back by the AMF, and then sends the authorization request to the server and receives the authorization response fed back by the server. Based on this, the UE, the AMF and server may interact with each other, and may prevent the authorization data from being copied and leaked through the temporary ID, so as to ensure that the authorization data sent by the UE to the server is consistent with the authorization data sent by the AMF to the UE.

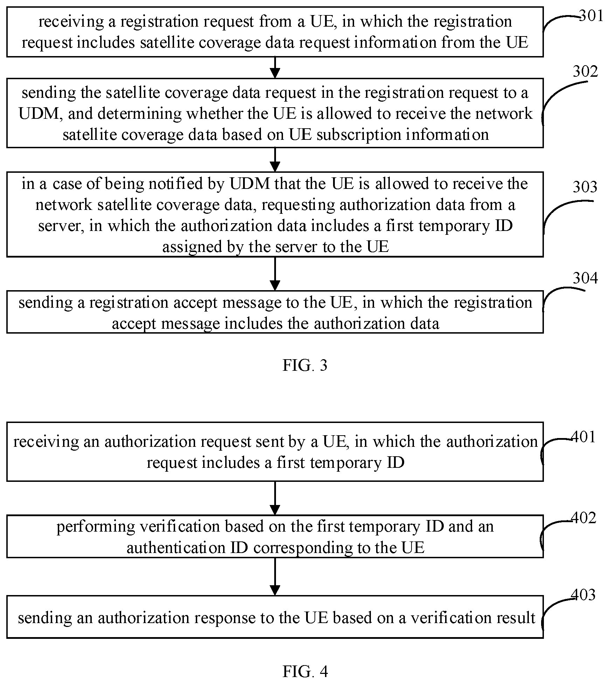

FIG. 3 is a flowchart illustrating an authorization method for network satellite coverage data in an embodiment of the present disclosure.

As illustrated in FIG. 3, the method is performed by an access and mobility management function, AMF, and may include but not limited to the following steps.

S301, a registration request from a user equipment, UE is received, in which the registration request includes satellite coverage data request information from the UE.

S302, the satellite coverage data request in the registration request is sent to a unified data management function, UDM, and it determined whether the UE is allowed to receive the network satellite coverage data based on UE subscription information.

S303, in a case of being notified by the UDM that the UE is allowed to receive the network satellite coverage data, authorization data is requested from a server, in which the authorization data includes a first temporary identifier, ID, assigned by the server to the UE.

And, in an embodiment of the present disclosure, before requesting the authorization data from the server, the AMF may first determine a location of the server and determine whether the server can transmit the authorization data.

Also, the authorization data may also be used to indicate a location, time, and satellite radio access technologies (RATs) to which the satellite coverage data request message in the registration request in S301 may be applicable.

S304, a registration accept message is sent to the UE, in which the registration accept message includes the authorization data.

In summary, in the authorization method for network satellite coverage data provided in the embodiment of the present disclosure, the AMF first receives the registration request sent by the UE, sends the satellite coverage data request in the registration request to the UDM, and determines whether the UE is allowed to receive the network satellite coverage data based on the UE subscription information. In a case that the UDM notifies that the UE is allowed to receive the network satellite coverage data, the authorization data is requested from the server, and finally the registration accept message is sent to the UE. Based on this, the AMF may interact with the UE and the server, and may implement receiving the temporary ID generated by the server and including the temporary ID in the authorization data to assist ID verification.

FIG. 4 is a flowchart illustrating an authorization method for network satellite coverage data in an embodiment of the present disclosure.

As illustrated in FIG. 4, the method is performed by a server, and may include but not limited to the following steps.

S401, an authorization request sent by a user equipment, UE is received, in which the authorization request includes a first temporary identifier, ID.

S402, verification is performed based on the first temporary ID and an authentication ID corresponding to the UE.

And, in an embodiment of the present disclosure, the authentication ID corresponding to the UE may be a UE ID in a UE certificate.

Also, in an embodiment of the present disclosure, the server may perform authentication and establish TLS security with the UE based on the authentication ID corresponding to the UE. The server performs verification based on a mapping relationship between the authentication ID corresponding to the UE and the first temporary ID assigned for the UE by the server and the first temporary ID received from the UE. In a case that the first temporary ID assigned for the UE by the server in the mapping relationship is the same as the first temporary ID in the authorization request sent by the UE, the authorization request sent from the UE is successfully verified.

S403, an authorization response is sent to the UE based on a verification result.

In summary, in the authorization method for the network satellite coverage data provided in the embodiment of the present disclosure, the server first receives the authorization request sent by the UE, in which the authorization request includes the first temporary ID, and performs verification based on the first temporary ID and the mapping relationship between the authentication ID and the temporary ID corresponding to the UE. Finally the authorization response is sent to the UE based on the verification result. Based on this, the server may generate the temporary ID and include it in the authorization data, as well as be able to implement mapping between the temporary ID and the UE ID, and verify the authorization data sent from the UE based on the mapping.

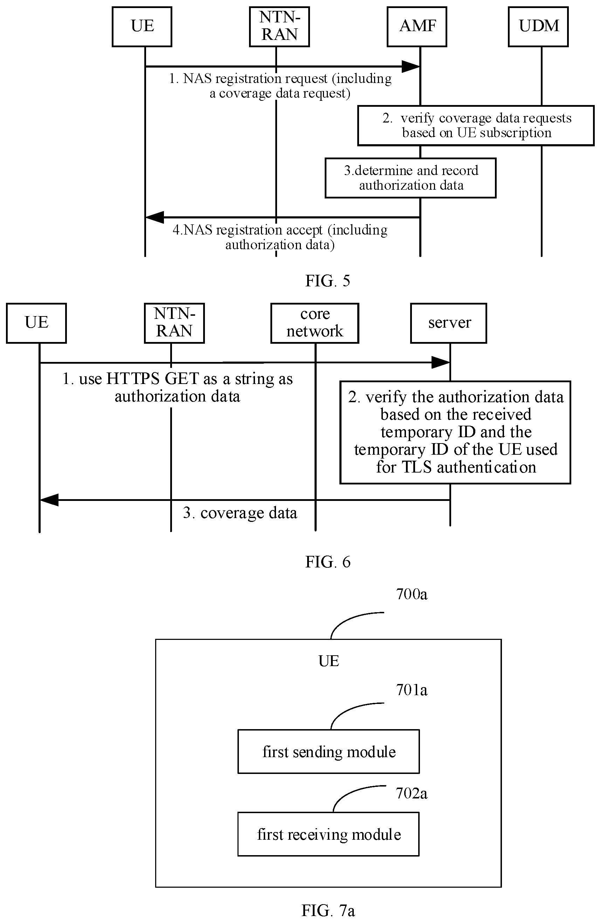

For ease of understanding, an explanation is made to the procedure for requesting authorization data in a method for network satellite coverage data, as shown in FIG. 5. FIG. 5 is a schematic diagram illustrating a procedure for requesting authorization data.

As shown in FIG. 5, the procedure for requesting authorization data include the following steps.

In the first step, a UE performs transmission through NAS signaling and sends a registration request to an AMF, in which, the registration request includes network satellite coverage data.

In the second step, the AMF sends a satellite coverage data request in the registration request to a UDM and determines whether the UE is allowed to receive the network satellite coverage data based on UE subscription information.

In the third step, in a case that the UE is allowed to receive the network satellite coverage data, the authorization data is identified and recorded.

In the fourth step, the AMF feeds back a registration request response (including the authorization data) to the UE through the NAS signaling.

For ease of understanding, an explanation is made to a process of an UE requesting coverage data from a server in a method for network satellite coverage data, as shown in FIG. 6.

FIG. 6 is a schematic diagram illustrating the process of an UE requesting coverage data from a server.

In step 1, the UE sends an authorization request to the server (for example, it may include a string, HTTPS GET), which is equal to authorization data obtained during the previous NAS process. The HTTPS request may be sent after TLS mutual authentication is performed between the UE and the server based on their authentication.

In step 2, the server may perform authentication with the UE based on an authentication ID corresponding to the UE and establish TLS security. The server performs verification based on a mapping relationship between the authentication ID corresponding to the UE and a first temporary ID assigned by the server for the UE and the first temporary ID received from the UE. In a case that the first temporary ID assigned by the server for the UE in the mapping relationship is the same as the first temporary ID in the authorization request sent by the UE, the authorization request sent from the UE is successfully verified.

In step 3, the server returns coverage data for the authorization request to the UE based on the authorization request in step 1. The returned coverage data needs to use a password shared by the UE and the server.

FIG. 7a is a block diagram illustrating a user equipment, UE, for network satellite coverage data in an embodiment of the present embodiment.

As shown in FIG. 7a, the UE includes the following modules.

A first sending module is configured to send a registration request to an AMF, in which the registration request includes satellite coverage data request information from the UE.

A first receiving module is configured to receive a registration accept response fed back by the AMF, in which the registration accept response includes authorization data, and the authorization data includes a first temporary identifier, ID, assigned by a server to the UE.

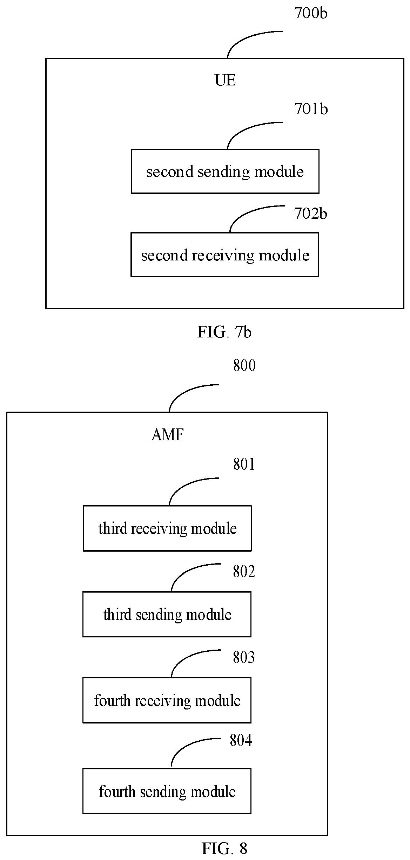

FIG. 7b is a block diagram illustrating a UE for network satellite coverage data in an embodiment of the present embodiment.

As shown in FIG. 7b, the UE includes the following modules.

A second sending module is configured to send an authorization request to the server, in which the authorization request includes the authorization data, and the authorization data includes the first temporary ID.

A second receiving module is configured to receive an authorization response sent by the server.

Optionally, in an embodiment of the present disclosure, the first temporary ID is sent from the server to the AMF.

Optionally, in an embodiment of the present disclosure, the UE is further configured to:
perform authentication with the server and establish a secure channel with the server.

In summary, in the authorization method for network satellite coverage data provided in the embodiment of the present disclosure, the UE first sends the registration request to the AMF, receives the authorization data in the registration accept response fed back by the AMF, and then sends the authorization request to the server and receives the authorization response fed back by the server. Based on this, the UE, the AMF and server may interact with each other, and may prevent the authorization data from being copied and leaked through the temporary ID, so as to ensure that the authorization data sent by the UE to the server is consistent with the authorization data sent by the AMF to the UE.

FIG. 8 is a block diagram illustrating an access and mobility management function, AMF, for network satellite coverage data in an embodiment of the present embodiment.

As shown in FIG. 8, the AMF includes the following modules.

A third receiving module is configured to receive a registration request from a user equipment, UE, in which the registration request includes satellite coverage data request information from the UE.

A third sending module is configured to send the satellite coverage data request in the registration request to a unified data management function, UDM, and determine whether the UE is allowed to receive network satellite coverage data based on UE subscription information.

A fourth receiving module is configured to in a case of being notified by UDM that the UE is allowed to receive the network satellite coverage data, request authorization data from a server, in which the authorization data includes a first temporary identifier, ID, assigned by the server to the UE.

A fourth sending module is configured to send a registration accept message to the UE, in which the registration accept message includes the authorization data.

Optionally, in an embodiment of the present disclosure, the fourth receiving module is further configured to:
receive the first temporary ID sent by the server.

In summary, in the authorization method for network satellite coverage data provided in the embodiment of the present disclosure, the AMF first receives the registration request sent by the UE, sends the satellite coverage data request in the registration request to the UDM, and determines whether the UE is allowed to receive the network satellite coverage data based on the UE subscription information. In a case that the UDM notifies that the UE is allowed to receive the network satellite coverage data, the authorization data is requested from the server, and finally the registration accept message is sent to the UE. Based on this, the AMF may interact with the UE and the server, and may implement receiving the temporary ID generated by the server and including the temporary ID in the authorization data to assist ID verification.

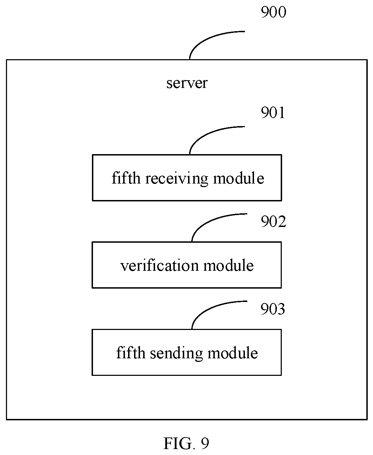

FIG. 9 is a block diagram illustrating a server for network satellite coverage data in an embodiment of the present embodiment.

As shown in FIG. 9, the server includes the following modules.

A fifth receiving module is configured to receive an authorization request sent by a user equipment, UE, in which the authorization request includes a first temporary identifier, ID.

A verification module is configured to perform verification based on the first temporary ID and an authentication ID corresponding to the UE.

A fifth sending module is configured to send an authorization response to the UE based on a verification result.

Optionally, in an embodiment of the present disclosure, the server is further configured to:
send the first temporary ID to an access and mobility management function, AMF.

Optionally, in one embodiment of the present disclosure, the server is further configured to:
perform authentication with the UE and establish a secure channel with the UE, and record the authentication ID of the UE when the UE passes the security authentication.

Optionally, in an embodiment of the present disclosure, the server is further configured to:
establish a mapping relationship between the first temporary ID and the authentication ID.

In summary, in the authorization apparatus for the network satellite coverage data provided in the embodiment of the present disclosure, the server first receives the authorization request sent by the UE, in which the authorization request includes the first temporary ID, and performs verification based on the first temporary ID and the authentication ID corresponding to the UE. Finally the authorization response is sent to the UE based on the verification result. Based on this, the server may generate the temporary ID and include it in the authorization data, as well as be able to implement mapping between the temporary ID and the UE ID, and verify the authorization data sent from the UE based on the mapping.

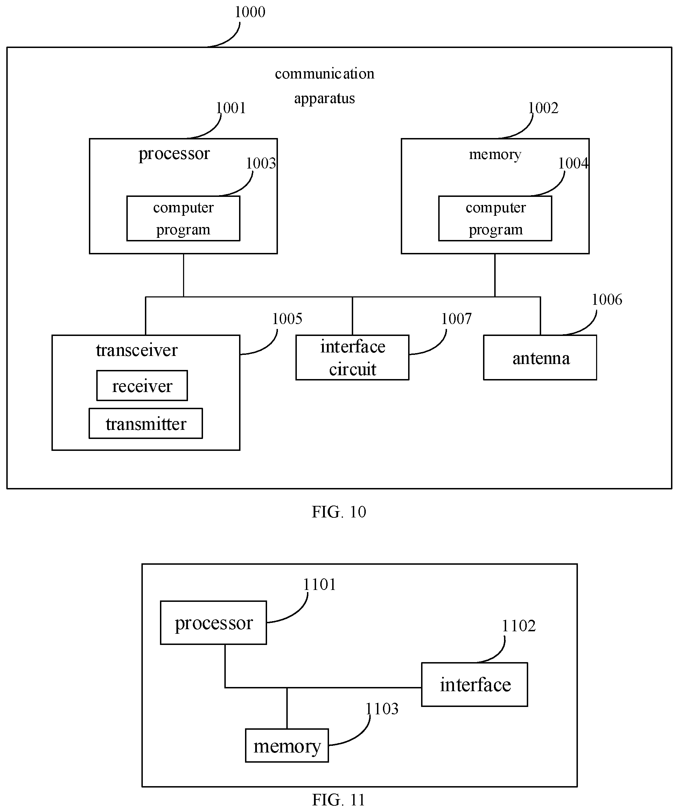

As illustrated in FIG. 10, which is a block diagram illustrating a communication apparatus 1000 provided in an embodiment of the present disclosure. The communication apparatus 1000 may be a network device, a terminal (for example the terminal in the preceding embodiments of the method), a chip, a system on chip or a processor that supports the network device to implement the method, or a chip, a system on chip or a processor that supports the terminal to implement the method. The device may be configured to implement the method described in the method embodiments, and may refer to descriptions in the method embodiments.

The communication apparatus 1000 may include one or more processors 1001. The processor 1001 may include a general purpose processor or a dedicated processor. For example, the processor 1001 may be a baseband processor or a central processor. The baseband processor may be configured to process a communication protocol and communication data, and the central processor may be configured to control a communication apparatus (e.g., a base station, a baseband chip, a terminal, a terminal chip, a DU or CU, etc.), to execute a computer program, and process data of the computer program.

Optionally, the communication apparatus 1000 may further include one or more memories 1002 with a computer program 1004 stored thereon. The processor 1001 executes the computer program 1004 so that the communication apparatus 1000 performs the method as described in the above method embodiments. Optionally, the memory 1002 may further store data. The communication apparatus 1000 and the memory 1002 may be independently configured or integrated together.

Optionally, the communication apparatus 1000 may further include a transceiver 1005 and an antenna 1006. The transceiver 1005 may be referred to as a transceiving unit, a transceiver or a transceiving circuit, which may be configured to achieve a transceving function. The transceiver 1005 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication apparatus 1000 may further include one or more interface circuits 1007. The interface circuit 1007 is configured to receive code instructions and transmit the code instructions to the processor 1001. The processor 1001 runs the code instructions so that the communication apparatus 1000 performs the method as described in the above method embodiment.

In an implementation, the processor 1001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1001 may be stored with a computer program 1003. The computer program 1003 runs on the processor 1001 so that the communication apparatus 1000 performs the method as described in the above method embodiments. The computer program 1003 may be solidified in the processor 1001, in which case the processor 1001 may be implemented by a hardware.

In an implementation, the communication apparatus 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs), etc.

The communication apparatus described in the above embodiments may be a network device or a terminal (for example the terminal in the preceding embodiments of the method), but the scope of the communication apparatus described in the present disclosure is not limited thereto, and a structure of the communication apparatus may not be subject to FIG. 10. The communication apparatus may be a stand-alone device or may be a part of a larger device. For example, the communication apparatus may be:
(1) a stand-alone integrated circuit (IC), or a chip, or a system on chip or a subsystem;
(2) a set of one or more ICs, which, optionally, may also include a storage component configured to store data and a computer program;
(3) an ASIC, such as a Modem;
(4) a module that may be embedded within other devices;
(5) a receiver, a terminal, a smart terminal, a cellular phone, a wireless device, a handset, a mobile unit, an in-vehicle device, a network device, a cloud device, an artificial intelligence device, etc.; and
(6) others, and so forth.

For the case that the communication apparatus may be a chip or a system on chip, please refer to a diagram of a structure of a chip as illustrated in FIG. 11. The chip illustrated in FIG. 11 may include a processor 1101 and an interface 1102. There may be one or more processors 1101, and there may be a plurality of interfaces 1102.

Optionally, the chip further includes a memory 1103. The memory 1103 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A readable storage medium with instructions stored thereon is further provided in the disclosure. When the instructions are executed by a computer, steps in the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the art may understand that various numbers such as first and second involved in the disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, the units and algorithm steps of each example described in conjunction with the embodiments disclosed herein can be implemented in an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, specific working processes of systems, apparatuses and units described above may refer to corresponding processes in the above method embodiments, which will not be repeated here.

The above are only implementations of the disclosure, but the protection scope of the disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

## Claims

1. An authorization method for network satellite coverage data, performed by a user equipment, UE, comprising:
sending a registration request to an access and mobility management function, AMF, wherein the registration request comprises satellite coverage data request information from the UE; and
receiving a registration accept response fed back by the AMF, wherein the registration accept response comprises authorization data, and the authorization data comprises a first temporary identifier, ID, assigned by a server to the UE.

2. The method according to claim 1, further comprising:
sending an authorization request to the server, wherein the authorization request comprises the authorization data, and the authorization data comprises the first temporary ID; and
receiving an authorization response sent by the server.

3. The method according to claim 1, wherein the first temporary ID is sent from the server to the AMF.

4. The method according to claim 1, before sending the authorization request to the server, further comprising:
performing authentication with the server and establishing a secure channel with the server.

5. An authorization method for network satellite coverage data, performed by an access and mobility management function, AMF, comprising:
receiving a registration request from a user equipment, UE, wherein the registration request comprises satellite coverage data request information from the UE;
sending the satellite coverage data request in the registration request to a unified data management function, UDM, and determining whether the UE is allowed to receive the network satellite coverage data based on UE subscription information;
in a case of being notified by the UDM that the UE is allowed to receive the network satellite coverage data, requesting authorization data from a server, wherein the authorization data comprises a first temporary identifier, ID, assigned by the server to the UE; and
sending a registration accept message to the UE, wherein the registration accept message comprises the authorization data.

6. The method according to claim 5, further comprising:
receiving the first temporary ID sent by the server.

7. An authorization method for network satellite coverage data, performed by a server, comprising:
receiving an authorization request sent by a user equipment, UE, wherein the authorization request comprises a first temporary identifier, ID;
performing verification based on the first temporary ID and an authentication ID corresponding to the UE; and
sending an authorization response to the UE based on a verification result.

8. The method according to claim 7, further comprising:
sending the first temporary ID to an access and mobility management function, AMF.

9. The method according to claim 7, further comprising:
performing authentication with the UE and establishing a secure channel with the UE, and recording the authentication ID of the UE when the UE passes the security authentication.

10. The method according to claim 8, further comprising:
establishing a mapping relationship between the first temporary ID and the authentication ID.

11. A user equipment, UE, wherein the UE comprises:
a first sending module, configured to send a registration request to an access and mobility management function, AMF, wherein the registration request comprises satellite coverage data request information from the UE; and
a first receiving module, configured to receive a registration accept response fed back by the AMF, wherein the registration accept response comprises authorization data, and the authorization data comprises a first temporary identifier, ID, assigned by a server to the UE.

12. The UE according to claim 11, further comprising:
a second sending module, configured to send an authorization request to the server, wherein the authorization request comprises the authorization data, and the authorization data comprises the first temporary ID; and
a second receiving module, configured to receive an authorization response sent by the server.

13. An access and mobility management function, AMF, wherein the AMF comprises:
a third receiving module, configured to receive a registration request from a user equipment, UE, wherein the registration request comprises satellite coverage data request information from the UE;
a third sending module, configured to send the satellite coverage data request in the registration request to a unified data management function, UDM, and determine whether the UE is allowed to receive the network satellite coverage data based on UE subscription information;
a fourth receiving module, configured to in a case of being notified by the UDM that the UE is allowed to receive the network satellite coverage data, requesting authorization data from a server, wherein the authorization data comprises a first temporary identifier, ID, assigned by the server to the UE; and
a fourth sending module, configured to send a registration accept message to the UE, wherein the registration accept message comprises the authorization data.

14. A server, wherein the server comprises:
a fifth receiving module, configured to receive an authorization request sent by a user equipment, UE, wherein the authorization request comprises a first temporary identifier, ID;
a verification module, configured to perform verification based on the first temporary ID and an authentication ID corresponding to the UE; and
a fifth sending module, configured to send an authorization response to the UE based on a verification result.

15. A communication apparatus, comprising a processor and a memory, wherein a computer program stored on the memory, and the processor executes the computer program stored on the memory to enable the apparatus to perform a method according to any one of claims 1 to 4, 5 to 6, or 7 to 10.

16. A communication apparatus, comprising a processor and interface circuit, wherein the interface circuit is used to receive a code instruction and transmit it to the processor;
and the processor is used to run the code instruction to perform a method according to any one of claims 1 to 4, 5 to 6, or 7 to 10.

17. A computer-readable storage medium, used to store an instruction, and when the instruction is executed, a method according to any one of claims 1 to 4, 5 to 6, or 7 to 10 is implemented.

18. A communication system, comprising:
a UE according to claim 10;
an AMF according to claim 11;
a server according to claim 12.
